# EUROPÄISCHE PATENTSCHRIFT

(11) **EP 0 633 825 B1**
(45) Veröffentlichungstag und Bekanntmachung des Hinweises auf die Patenterteilung: **02.04.1997**
(21) Anmeldenummer: 93911446.8
(22) Anmeldetag: 02.04.1993
(51) Int. Cl.: B23P 19/00, B21J 15/32, B23P 19/06

(54) **ZUFÜHRVORRICHTUNG ZUM ZUFÜHREN VON FÜGETEILEN**
FEED DEVICE FOR FIXING MEANS
DISPOSITIF D'AMENEE DE PIECES D'ASSEMBLAGE

(30) Priorität: 03.04.1992 DE 4211278
(43) Veröffentlichungstag der Anmeldung: 18.01.1995
(73) Patentinhaber: PROFIL-Verbindungstechnik GmbH & Co. KG, 61381 Friedrichsdorf (DE)
(72) Erfinder: Luckhardt, Wolfgang, D-61462 Königstein (DE); Luckhardt, Heinrich, VERSTORBEN (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)
(86) Internationale Anmeldenummer: EP9300835
(87) Internationale Veröffentlichungsnummer: WO9319889

(56) Entgegenhaltungen:
- FR-A- 974 882
- FR-A- 2 670 430
- GB-A- 2 058 986
- GB-A- 2 067 149

## Beschreibung

Die Erfindung betrifft eine Zuführvorrichtung zum Zuführen von Fügeteilen, insbesondere Muttern oder anderen Elementen, zu einem Zuführkanal einer Bearbeitungseinrichtung nach dem Oberbegriff des Patentanspruchs 1.

Bei derartigen Bearbeitungseinrichtungen handelt es sich insbesondere um Stanzeinrichtungen, mit denen Muttern oder andere Fügeteile in Bleche eingepreßt werden. Der Zuführkanal ist üblicherweise in einem Führungsstück gebildet, das am Pressenoberteil federnd so abgestützt ist, daß bei einer Abwärtsbewegung des Pressenoberteils ein Stempel jeweils eine Mutter durch den Zuführkanal treibt.

Die Muttern werden von einem Sortierer durch eine vorzugsweise flexible Zuführleitung (z.B. Schlauch) zur Stanzeinrichtung transportiert. Die Übergabe der Muttern vom Ende der Zuführleitung zum Zuführkanal übernimmt die Zuführvorrichtung, die zu diesem Zweck mit dem Führungsstück der Stanzeinrichtung verbunden werden muß. Dies geschieht bisher beispielsweise durch Anschrauben des Mundstückes der Zuführvorrichtung am Führungsstück der Stanzeinrichtung. Das An- und Entkoppeln der Zuführvorrichtung ist daher umständlich und vergleichsweise zeitaufwendig. Auch sind die vorbekannten Zuführvorrichtungen häufig konstruktiv kompliziert, teuer in der Herstellung und störanfällig.

Der Erfindung liegt die Aufgabe zugrunde, eine Zuführvorrichtung der im Oberbegriff des Patentanspruchs 1 angegebenen Gattung so weiterzubilden, daß sie bei einfachem konstruktiven Aufbau ein möglichst rasches und bequemes An- und Entkoppeln des Mundstückkanals an das Führungsstück der Bearbeitungseinrichtung erlaubt.

Diese Aufgabe wird durch die im Patentanspruch 1 gekennzeichnete Erfindung gelöst.

Bei der erfindungsgemäß ausgebildeten Zuführvorrichtung übernehmen die Ankopplung am Führungsstück die beiden am Mundstück angelenkten Hebel. Zum An- und Entkoppeln brauchen daher lediglich die beiden Hebel zwischen ihrer Schließ- und Öffnungsstellung verschwenkt werden. Dies läßt sich sehr rasch und bequem auf manuellem Weg durchführen. Ein Anziehen bzw. Lösen von Schrauben oder ähnlichen Befestigungselementen ist daher nicht erforderlich. Die einfache An- und Entkopplung wird durch einen vergleichsweise geringen konstruktiven und herstellungstechnischen Aufwand erreicht. Gleichzeitig ist eine präzise Führung der Elemente zwischen der Zuführleitung und dem Zuführkanal gewährleistet. Darüberhinaus zeichnet sich die Erfindung durch Betriebssicherheit und hohe Lebensdauer aus.

Die Zuführleitung kann als zu einem Sortierer oder einer anderen Quelle führender Schlauch ausgebildet sein. Eine andere Möglichkeit besteht darin, die Zuführleitung als Magazinkanal eines am Mundstück angebrachten Magazins auszubilden, das eine vorgegebene Anzahl von Fügeteilen aufnimmt. In diesem Fall kann eine Befülleinrichtung vorgesehen werden, an der das Mundstück der Zuführvorrichtung zum Befüllen des Magazins ankoppelbar ist.

Gemäß einer Weiterbildung-der Erfindung ist am Mundstück eine Verriegelung vorgesehen, die die Hebel in angekoppeltem Zustand in ihrer Schließstellung verriegelt. Dies bietet eine zusätzliche Sicherung gegen ein unbeabsichtigtes Öffnen der Hebel.

Weitere vorteilhafte Ausgestaltungen der Erfindung gehen aus den Unteransprüchen hervor.

Anhand der Zeichnung wird ein bevorzugtes Ausführungsbeispiel der Erfindung erläutert. Es zeigen:
- Fig. 1: einen Längsschnitt durch eine Zuführvorrichtung für Muttern, die an einem Führungsstück einer Stanzeinrichtung angekoppelt ist;
- Fig. 2: einen Querschnitt in Blickrichtung der Pfeile II in Fig. 1;
- Fig. 3: eine Endansicht auf die Zuführvorrichtung der Fig. 1 und 2, gesehen von der rechten Seite in den Fig. 1, 2 aus;
- Fig. 4: einen Längsschnitt durch ein anderes Ausführungsbeispiel einer Zuführvorrichtung, die mit einem Magazin für Muttern versehen ist;
- Fig. 5: eine Draufsicht auf die Zuführvorrichtung der Fig. 4;
- Fig. 6: einen Längsschnitt durch die Zuführvorrichtung der Fig. 4 und 5 und einer Stanzeinrichtung, an der die Zuführvorrichtung angekoppelt ist;
- Fig. 7: einen der Fig. 4 entsprechenden Längsschnitt durch eine abgewandelte Ausführungsform der Zuführvorrichtung nach den Fig. 4, 5;
- Fig. 8: eine teilweise geschnittene Seitenansicht einer Befülleinrichtung zum Befüllen des Magazins der Zuführvorrichtung nach den Fig. 4, 5;
- Fig. 9: eine teilweise geschnittene Draufsicht auf die Befülleinrichtung der Fig. 8.

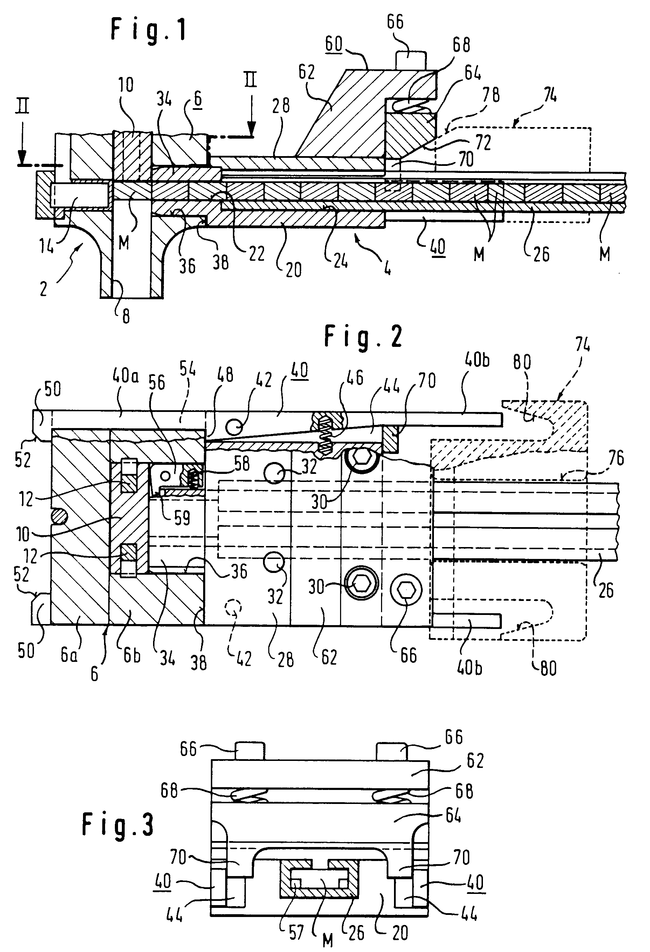

Im linken Bereich der Fig. 1 und 2 ist ein Teil einer Bearbeitungseinrichtung in Form einer Stanzeinrichtung 2 dargestellt, die zum Einpressen von Muttern M in ein Blech (nicht gezeigt) dient. Die Muttern M werden von einem Sortierer (nicht gezeigt) durch die Zuführvorrichtung 4 über eine z.B. als Schlauch ausgebildete flexible oder feste Zuführleitung 26 zugeführt.

Die Stanzeinrichtung 2 besitzt ein aus zwei Teilen 6a, b bestehendes Führungsstück 6, das an einem auf- und abbewegbaren Pressenoberteil (nicht gezeigt) federnd abgestützt und mit einem Zuführkanal 8 versehen ist. Ein im Zuführkanal 8 gleitend geführter Stempel 10 dient dazu, bei einer Abwärtsbewegung des Pressenoberteils jeweils eine Mutter M durch den Zuführkanal 8 zu treiben und in das Blech (nicht gezeigt) einzupressen. Während der Abwärtsbewegung des Stempels 10 wird die Mutter M von zwei in Fig. 2 angedeuteten Halteklauen 12 in ihrer Position festgelegt. Ferner ist in Fig. 1 eine Sensoreinrichtung 14 gezeigt, die das Vorhandensein einer Mutter M feststellt. Der weitere Aufbau der Stanzeinrichtung 2 ist für das Verständnis der vorliegenden Anmeldung ohne Bedeutung und wird daher nicht beschrieben.

Die Zuführvorrichtung 4 besteht aus einem Mundstück 20 in Form eines plattenförmigen Bauteils, das mit einem durchgehenden Mundstückkanal 22 für die Muttern M versehen ist. Der Mundstückkanal 22 besitzt einen querschnittserweiterten Abschnitt 24, der einen Endabschnitt der vom Sortierer kommenden Zuführleitung 26 aufnimmt.

Das Mundstück 20 hat im Bereich des querschnittserweiterten Abschnitts 24 eine offene Oberseite, die durch eine Klemmplatte 28 verschlossen ist. Die Klemmplatte 28, die durch zwei Schrauben 30 am Mundstück 20 befestigt ist, dient dazu, die Zuführleitung 26 im Mundstück 20 in vertikaler Richtung festzulegen. In horizontaler Richtung wird die Zuführleitung 26 von zwei zylindrischen Stiften 32 festgelegt.

Das Mundstück 20 ist an seinem von der Zuführleitung 26 abgewandten Ende mit einem Ansatz 34 versehen, der zum Ankoppeln in eine entsprechend geformte Aufnahmeöffnung 36 des Führungsstückes 6 einsetzbar ist. Die exakte Positionierung des Mundstücks 20 relativ zum Führungsstück 6 wird durch Anlage des Ansatzes 34 an den Wandflächen der Aufnahmeöffnung 36 sowie durch Anlage der am Ansatz 34 angrenzenden Stirnfläche 38 des Mundstückes 20 am Führungsstück 6 erreicht. Hierbei erstreckt sich der Ansatz 34 bis hin zur entsprechenden Seitenfläche des Zuführkanals 8, so daß der Mundstückkanal 22 unmittelbar in den Zuführkanal 8 mündet. Auf diese Weise wird ein sicherer Transport der Muttern M von der Zuführleitung 26 bis zum Zuführkanal 8 gewährleistet.

Zum Ankoppeln des Mundstückes 20 am Führungsstück 6 dienen zwei Hebel 40, die mittels Bolzen 42 in seitlichen Ausnehmungen 44 des Mundstückes 20 schwenkbar gelagert sind. Jeder Hebel 40 besteht aus einem Haltearm 40a und einem Betätigungsarm 40b. Die Hebel 40 werden jeweils von einer Feder 46, die zwischen dem Betätigungsarm 40b und dem Mundstück 20 wirksam ist, in Richtung auf eine Schließstellung vorgespannt.

An den Haltearmen 40a sind Ansätze 48 angeformt, die im entkoppelten Zustand durch die Vorspannung der Federn 46 gegen Anlageflächen in den Ausnehmungen 44 angedrückt werden, um die Hebel 40 in einer gespreizten Stellung zu halten. Im angekoppelten Zustand (Fig. 2) werden die Haltearme 40a durch die Kraft der Federn 46 in seitliche Nuten 54 des Führungsstückes 6 gedrückt. Hierbei umfassen die Haltearme 40a mit ihren hakenförmigen Enden 50 das Führungsstück 6, so daß die Hebel 40 durch eine Formschlußverbindung das Mundstück 20 am Führungsstück 6 festlegen. Die hakenförmigen Enden 50 sind an ihren einander zugewandten Seiten mit Schrägen 52 versehen, die das Aufschieben der Haltearme 40a in die Nuten 54 des Führungsstückes 6 erleichtern.

Im Ansatz 34 des Mundstückes 20 ist eine Klinke 56 schwenkbar gelagert. Die Klinke 56 steht unter der Wirkung einer Feder 58. Ist das Mundstück 20 abgekoppelt, so drückt die Feder 58 die Klinke 56 in eine Sperrstellung, in der die Klinkenspitze 59 den Mundstückkanal 22 sperrt, so daß die im Mundstückkanal 22 befindlichen Muttern M nicht herausrutschen können. Wird der Ansatz 34 des Mundstückes 20 in die Aufnahmeöffnung 36 eingeschoben, so wird die Klinke 56 durch Anlage an einer Wand der Aufnahmeöffnung 36 selbsttätig in eine Stellung zurückgeschwenkt, in der sie den Mundstückkanal 22 freigibt (Fig. 2). Der Mundstückkanal 22 ist im Bereich der Klinkenspitze 59 mit an die Querschnittsform der Mutter M angepaßten Absätzen 57 (Fig. 3) versehen, die eine exakte Führung der Mutter M in diesem Bereich sicherstellen.

Das Mundstück 20 kann wahlweise mit einer Verriegelung 60 für die beiden Hebel 40 ausgerüstet werden. Die Verriegelung 60 weist einen Aufnahmebock 62 auf, der durch die im Aufnahmebock 62 versenkten Schrauben 30 an dem Mundstück 20 befestigt ist.

An einer Anlagefläche des Aufnahmebocks 62 ist ein Arretierstück 64 vertikal verschiebbar geführt. Das Arretierstück 64 wird von einer an einem seitlichen Flansch des Aufnahmebocks 62 abgestützten Feder 68 nach unten in eine Verriegelungsstellung vorgespannt. In dieser Stellung wird es von einer in das Arretierstück 64 eingeschraubten Schraube 66 gehalten, die sich durch eine Bohrung im seitlichen Flansch des Aufnahmebocks 62 erstreckt und mit ihrem Kopf an der Oberseite des Aufnahmebocks 62 abgestützt ist.

Das Arretierstück 64 ist mit zwei seitlichen Verriegelungsvorsprüngen 70 (siehe insbesondere Fig. 3) versehen, die in der Verriegelungsstellung zwischen die beiden Betätigungsarme 40b der Hebel 40 greifen und somit ein Einwärtsschwenken der Betätigungsarme 40b verhindern. Die Hebel 40 sind somit in ihrer Schließstellung verriegelt und können erst nach einer Aufwärtsbewegung des Arretierstückes 64 in eine Entriegelungsstellung geöffnet werden.

Die Funktionsweise der Zuführvorrichtung 4 dürfte bereits weitgehend aus der vorstehenden Beschreibung ersichtlich sein. Zum Ankoppeln wird das Mundstück 20 mit der daran befestigten Zuführleitung 26 an das Führungsstück 6 der Stanzeinrichtung so herangeführt, daß die Haltearme 40a mit den hakenförmigen Enden 50 in die Nuten 54 und der Ansatz 34 in die Aufnahmeöffnung 36 eintreten. Ist die Zuführvorrichtung 4, wie gezeigt, mit einer Verriegelung 60 versehen, so muß zunächst die Verriegelung 60 durch Hochschieben des Arretierstückes 64 entriegelt werden, damit die Betätigungsarme 40b einwärts geschwenkt werden können. Beim Einschieben des Ansatzes 34 in die Aufnahmeöffnung 36 wird die Klinke 56 durch Anlage an einer Seitenwand der Aufnahmeöffnung 36 in die Freigabestellung geschwenkt, in der sie den Mundstückkanal 22 freigibt.

Sobald das Mundstück 20 mit seiner Stirnfläche 38 am Führungsstück 6 anliegt, werden die Haltearme 40a durch die Federn 46 nach innen in die Schließstellung geschwenkt, in der sie in die Nuten 54 des Führungsstückes 6 greifen und die hakenförmigen Enden 50 das Führungsstück 6 umfassen. Das Arretierstück 64 wird durch die Federn 68 nach unten in seine Verriegelungsstellung gedrückt, in der die Verriegelungsvorsprünge 70 zwischen die Betätigungsarme 40b greifen, wodurch die Hebel 40 in ihrer Schließstellung verriegelt sind.

Das Mundstück 20 ist nun mit dem Führungsstück 6 fest verbunden, so daß die Muttern M durch den Mundstückkanal 22 an den Zuführkanal 8 abgegeben werden können.

Zum Lösen des Mundstücks 20 vom Führungsstück 6 wird zunächst das Arretierstück 64 entgegen der Kraft der Federn 68 nach oben in seine Entriegelungsstellung verschoben. Anschließend werden die Hebel 40 durch Einwärtsschwenken der Betätigungsarme 40b in ihre Öffnungsstellung geschwenkt, so daß nun das Mundstück 20 vom Führungsstück 6 abgezogen werden kann. Wenn das Mundstück 20 vom Führungsstück 6 abgezogen ist, wird die Klinke 56 durch die Feder 58 wieder in ihre Sperrstellung gedrückt, um ein Herausrutschen der Muttern aus dem Mundstückkanal 22 zu verhindern. Die Vorsprünge 48 an den Haltearmen 40a der Hebel 40 werden von den Federn 46 in Anlage mit den Anlageflächen in die Ausnehmungen 44 des Mundstücks 20 gedrückt. Die Zuführvorrichtung ist dann für einen erneuten Ankopplungsvorgang betriebsbereit.

Zum An- und Entkoppeln des Mundstückes 20 kann ein Hilfswerkzeug 74 benutzt werden, das in den Fig. 1 und 2 gestrichelt dargestellt ist. Das Hilfswerkzeug 74 ist als blockförmiges Teil ausgebildet, das an seiner Unterseite mit einer Ausnehmung 76 entsprechend der Zuführleitung 26 versehen ist, so daß das Hilfswerkzeug 74 auf der Zuführleitung 26 in Längsrichtung verschoben werden kann.

An seiner Vorderseite ist das Hilfswerkzeug 74 mit einer Rampenfläche 78 versehen, die mit einer entsprechenden Rampenfläche 72 des Arretierstückes 64 zusammenwirkt. Ferner sind an zwei seitlichen Armen des Hilfswerkzeuges 74 zwei weitere Rampenflächen 80 vorgesehen, die mit den beiden Hebeln 40 zusammenwirken.

Das Hilfswerkzeug 74 kann mit einem relativ langen Stiel (nicht gezeigt) versehen werden, so daß das An- und Entkoppeln der Zuführvorrichtung aus relativ großer Entfernung durchgeführt werden kann, was insbesondere im Hinblick auf Sicherheitsgründe von Bedeutung ist.

Wie ohne weiteres ersichtlich, übernehmen die Rampenflächen 78 und 80 die zum Verschieben des Arretierstückes 64 und zum Verschwenken der Hebel 40 erforderliche kombinierte Betätigungsbewegung sowohl beim An- wie auch beim Entkoppeln. Hierzu muß lediglich das Hilfswerkzeug 74 entlang der Zuführleitung 26 in Richtung auf das Mundstück 20 verschoben werden.

Es versteht sich, daß die Zuführvorrichtung 4 zum Zuführen nicht nur von eckigen Muttern, sondern auch von runden Muttern oder auch von anderen Elementen wie zum Beispiel Bolzen, Nieten etc. verwendet werden kann.

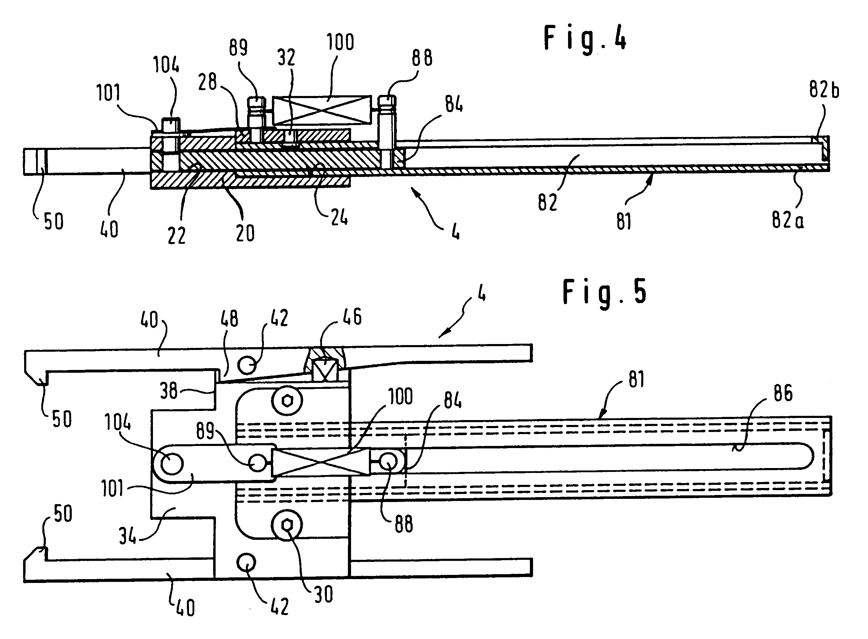

Die Fig. 4 und 5 zeigen ein abgewandeltes Ausführungsbeispiel einer Zuführvorrichtung. Soweit das Ausführungsbeispiel der Fig. 4, 5 mit dem der vorhergehenden Figuren übereinstimmt, wurden die gleichen Bezugszeichen verwendet.

Die Zuführvorrichtung der Fig. 4, 5 unterscheidet sich von der Zuführvorrichtung der Fig. 1 bis 3 dadurch, daß die Zuführleitung zum Zuführen der Muttern oder anderen Fügeteile nicht als zu einem Sortierer führender Zuführschlauch, sondern als Magazin 81 ausgebildet ist, das eine vorgegebene Anzahl von Muttern (oder anderen Fügeteilen) aufnimmt.

Das Magazin 81 besitzt einen Magazinkanal 82, der von einem unteren Magazinteil 82a und einem oberen Magazinteil 82b gebildet wird. Die beiden Teile des Magazins 81 erstrecken sich in den querschnittserweiterten Abschnitt 24 des Mundstücks 20 und sind dort durch die Klemmplatte 28 und den Stift 32 festgelegt. Im Magazinkanal 82 ist ein Schieber 84 längsverschiebbar gelagert.

Bei dem Ausführungsbeispiel der Fig. 4, 5 wird der Schieber 84 durch eine Zugfeder 100 in eine Richtung vorgespannt, in der er die im Magazinkanal 82 gelagerten Muttern in Richtung auf das Auslaßende des Ansatzes 34 des Mundstückes 20 treibt. Die Zugfeder 100 ist einerseits an einem am Mundstück festgelegten Stift 89 und andererseits an einem am Schieber 84 festgelegten Stift 88 aufgehängt, der sich durch einen längsverlaufenden Durchbruch 86 des oberen Magazinteils 82 erstreckt.

Um im abgekoppelten Zustand der Zuführvorrichtung 4 ein Herausfallen der Muttern aus dem Mundstückkanal 22 und somit aus dem Magazin 81 zu verhindern, ist eine Sperre in Form eines Bolzens 104 vorgesehen, der durch eine an der Zuführvorrichtung festgelegte Blattfeder 101 in eine den Mundstückkanal 22 sperrende Stellung vorgespannt ist und beim Ankoppeln selbsttätig in eine Freigabestellung gedrückt wird.

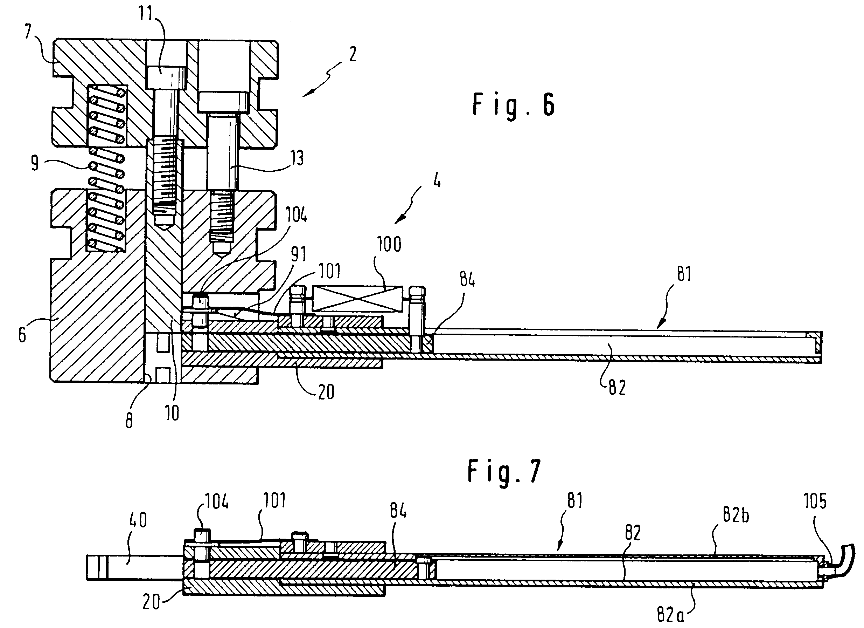

Die in den Fig. 4, 5 gezeigte Zuführvorrichtung ist unabhängig von einem Zuführschlauch zum Zuführen der Muttern und kann daher an einer "mobilen" Bearbeitungseinrichtung angekoppelt werden, die ihrerseits an einem beweglichen Maschinenteil auswechselbar angebracht werden kann. Einen derartigen Anwendungsfall zeigt Fig. 6, in der die Zuführvorrichtung 4 der Fig. 4, 5 an einer als mobile Einheit ausgebildeten Stanzeinrichtung 2 angekoppelt ist.

Die Stanzeinrichtung 2 besitzt ein Führungsstück 6 in Form eines unteren Gehäuseteils, das gegenüber einem oberen Gehäuseteil 7 durch Federn 9 elastisch abgestüzt ist. Der zum Einstanzen der Muttern dienende Stempel 10 ist durch eine Schraube 11 im oberen Gehäuseteil 2 festgelegt und erstreckt sich in den Zuführkanal 8 des Führungsstückes 6.

Die Zuführvorrichtung 4 wird im Prinzip in der gleichen Weise wie die Zuführvorrichtung der Fig. 1 bis 3 an der Stanzeinrichtung 2 angekoppelt, wie in Fig. 6 zu sehen ist. Das Magazin 81 wird im abgekoppelten Zustand mit einer vorgegebenen Anzahl von Muttern (beispielsweise zehn Muttern) gefüllt, so daß sich der Schieber 84 aus seiner in Fig. 6 gezeigten linken Endstellung in seine rechte Endstellung bewegt, in der die Muttern durch den Bolzen 89 am Herausfallen gehindert werden. Beim Ankoppeln der Zuführvorrichtung 4 an der Stanzeinrichtung 2 wird der Bolzen 89 selbsttätig durch eine Schrägfläche 91 in seine freigebende Stellung bewegt. Der durch die Feder 100 vorgespannte Schieber 84 kann dann die Muttern nacheinander dem Zuführungskanal 8 zuführen, wo die Muttern dann vom Stempel 10 durch eine Relativbewegung zwischen dem oberen und unteren Gehäuseteil 7, 6 nach unten ausgetrieben werden.

Während bei dem Ausführungsbeispiel der Fig. 4 bis 6 der Schieber 84 durch Federkraft verschoben wird, wird bei dem Ausführungsbeispiel der Fig. 7 die Vorspannkraft des Schiebers 84 durch Druckluft erzeugt. Zu diesem Zweck ist am hinteren Ende des strömungsmitteldicht ausgebildeten Magazinkanals 82 ein Druckluftanschluß 105 vorgesehen, der über eine Schlauchverbindung zu einer Druckluftquelle führt. Die Schlauchverbindung kann zu einer am Mundstück 20 vorgesehenen Druckluftkupplung (nicht gezeigt) geführt sein, die beim Ankoppeln der Zuführvorrichtung an der Stanzeinrichtung 2 selbsttätig eine Verbindung zu der Druckluftquelle herstellt.

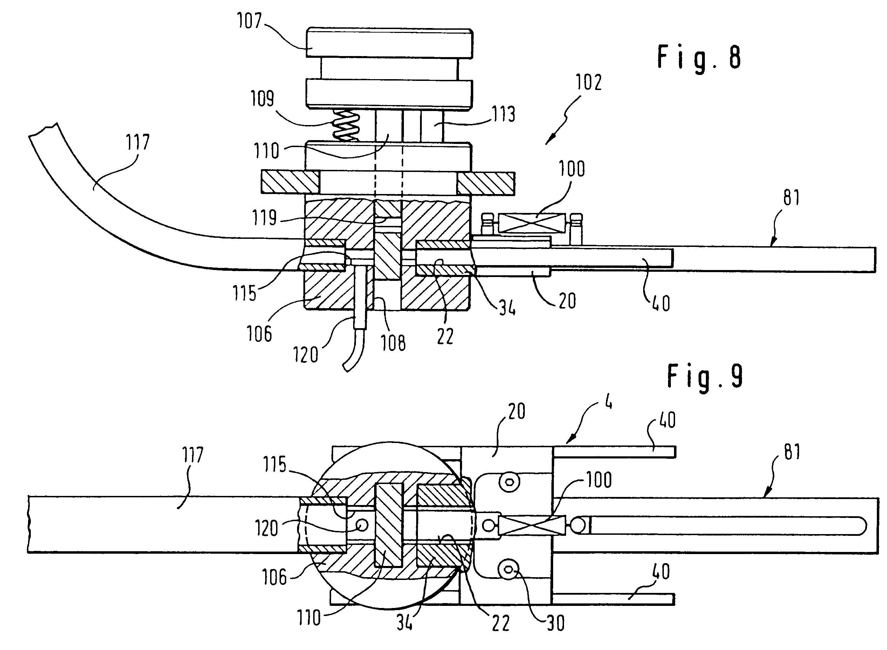

Zum Befüllen des Magazins 81 kann eine Befülleinrichtung 102 verwendet werden, wie sie in den Fig. 8, 9 dargestellt ist. Die Befülleinrichtung 102 hat einen ähnlichen Aufbau wie die Stanzeinrichtung 2 der Fig. 6. Sie besitzt ein unteres Gehäuseteil 106 und ein oberes Gehäuseteil 107, die durch Federn 109 elastisch gegeneinander abgestützt sind und eine Hubbegrenzung in Form von Schrauben 113 aufweisen. Ein am oberen Gehäuseteil 107 festgelegter Stempel 110 erstreckt sich in einen Führungskanal 108 im unteren Gehäuseteil 106.

Im unteren Gehäuseteil 106 ist ferner ein querverlaufender Durchgangskanal 115 vorgesehen, an dessen (in den Fig. 8, 9) linken Ende ein Zuführschlauch 117 angebracht ist, der beispielsweise zu einem Sortierer oder einer anderen Einrichtung zur Abgabe von Muttern führt. Ähnlich wie bei der Stanzeinrichtung 2 der Fig. 6 ist an der Befülleinrichtung 102 die Zuführvorrichtung 4 mit dem Magazin 81 ankoppelbar, so daß das rechte Ende des Durchgangskanals 115 mit dem Mundstückkanal 22 im Ansatz 34 des Mundstücks 20 verbunden ist.

Wie in Fig. 8 gezeigt, nimmt der Stempel 110 normalerweise eine Stellung ein, in der er den Durchgangskanal 115 sperrt, so daß die Muttern nicht aus dem Zuführschlauch 117 herausrutschen können. Durch eine Relativbewegung zwischen dem unteren und oberen Gehäuseteil 106, 107 wird der Stempel 110 in eine Stellung getrieben, in der ein Durchbruch 119 des Stempels 110 mit dem Durchgangskanal 115 fluchtet. Der Durchbruch 119 entspricht in seiner Breite den Muttern. Die Muttern können dann aus dem Zufuhrschlauch 117 durch den Mundstückkanal 22 in das Magazin 81 bewegt werden.

Wird das Magazin 81 wie in den Fig. 4 bis 6 und 8, 9 durch Federkraft betätigt, so muß die Zuführkraft (z.B. Schwerkraft), mit der die Muttern durch den Zuführschlauch 117 zugeführt werden, groß genug sein, um die Federkraft des Magazins 81 zu überwinden. Bei der Ausführungsform der Fig. 7, bei der das Magazin 81 pneumatisch betätigt wird, wird die Anordnung so getroffen, daß der Schieber 84 beim Befüllen nicht mit Druckluft beaufschlagt wird, so daß nur eine entsprechend geringe Zuführkraft zum Zuführen der Muttern erforderlich ist.

Wie in Fig. 8 gezeigt, ist die Befülleinrichtung 102 mit einer Sensoreinrichtung 120 versehen, die das Zuführen der Muttern über den Zuführschlauch 117 überwacht (z.B. die Anzahl der zugeführten Muttern zählt) und bei gefülltem Magazin 81 ein Signal abgibt, durch das (über eine nicht gezeigte Steuereinrichtung) der Stempel 110 in seine den Durchgangskanal 115 sperrende Stellung bewegt wird.

## Patentansprüche

1. Zuführvorrichtung zum Zuführen von Fügeteilen, insbesondere Muttern oder anderen Elementen, zu einem Zuführkanal einer Bearbeitungseinrichtung zum Einpressen oder Befestigen der Fügeteile an Bauteilen, mit einem Mundstück (20), das einen durchgehenden Mundstückkanal (22) für die Elemente (M) aufweist und an einem Führungsstück (6) der Bearbeitungseinrichtung (2) so ankoppelbar ist, daß der Mundstückkanal (20) an einem Ende mit dem im Führungsstück (6) vorgesehenen Zuführkanal (8) in Verbindung steht, während das andere Ende des Mundstückkanals (22) an einer Zuführleitung (26) angeschlossen ist, dadurch gekennzeichnet, daß an gegenüberliegenden Seiten des Mundstückes (20) zwei Hebel (40) angelenkt sind, die durch Federn (46) in eine Schließstellung zum Ankoppeln des Mundstückes (20) am Führungsstück (6) vorgespannt sind und die manuell in eine Öffnungsstellung zum Lösen des Mundstückes (20) vom Führungsstück (6) schwenkbar sind, und daß die Hebel (40) im angekoppelten Zustand in seitliche Nuten (54) des Führungsstückes (6) greifen und mit hakenförmigen Enden (50) das Führungsstück (6) umfassen.

2. Zuführvorrichtung nach Anspruch 1, dadurch gekennzeichnet, daß das Mundstück (20) einen Ansatz (34) aufweist, der zum Ankoppeln der Zuführvorrichtung in eine entsprechend geformte Aufnahmeöffnung (36) des Führungsstückes (6) so einsetzbar ist, daß der durch den Ansatz (34) verlaufende Mundstückkanal (22) seitlich in den Zuführkanal (8) mündet und das Mundstück (20) mit seiner am Ansatz (34) angrenzenden Stirnfläche (38) am Führungsstück (6) anliegt.

3. Zuführvorrichtung nach Anspruch 1, dadurch gekennzeichnet, daß die hakenförmigen Enden (50) der Hebel (40) an ihren einander zugewandten Seiten mit Schrägen (52) versehen sind, die das Aufschieben der Hebel (40) auf das Führungsstück (6) erleichtern.

4. Zuführvorrichtung nach einem der vorhergehenden Ansprüche, dadurch gekennzeichnet, daß jeder der Hebel (40) zwei Arme (40a, b) aufweist, von denen der eine als am Führungsstück angreifender Haltearm (40a) und der andere als Betätigungsarm (40b) dient.

5. Zuführvorrichtung nach Anspruch 4, dadurch gekennzeichnet, daß die Federn (46) zwischen den Betätigungsarmen (40b) und dem Mundstück (20) wirksam sind und im abgekoppelten Zustand die Haltearme (40a) mit an diesen vorgesehenen Vorsprüngen (48) gegen Anlageflächen des Mundstücks (20) andrücken.

6. Zuführvorrichtung nach einem der vorhergehenden Ansprüche, dadurch gekennzeichnet, daß die Zuführleitung (26) in einem querschnittserweiterten Abschnitt (24) des Mundstückkanals (22) angeordnet und darin festgelegt ist.

7. Zuführvorrichtung nach Anspruch 6, dadurch gekennzeichnet, daß die Oberseite des plattenförmig ausgebildeten Mundstücks (20) in dem Bereich des querschnittserweiterten Abschnitts (24) des Mundstückkanals (22) von einer Klemmplatte (28) gebildet wird, die zusammen mit Stiften (32) die Zuführleitung (26) im Mundstück (20) festlegt.

8. Zuführvorrichtung nach einem der Ansprüche 2 bis 7, dadurch gekennzeichnet, daß im Ansatz (34) des Mundstückes (20) eine federvorgespannte Klinke (56) angeordnet ist, die im abgekoppelten Zustand durch die Federvorspannung in eine den Mundstückkanal (22) sperrende Stellung und beim Ankoppeln selbsttätig in eine Freigabestellung gedrückt wird.

9. Zuführvorrichtung nach einem der vorhergehenden Ansprüche, gekennzeichnet durch eine am Mundstück (20) vorgesehene Verriegelung (60), die die Hebel (40) im angekoppelten Zustand in ihrer Schließstellung verriegelt.

10. Zuführvorrichtung nach Anspruch 9, dadurch gekennzeichnet, daß die Verriegelung (60) aus einem am Mundstück (20) befestigten Aufnahmebock (62) und einem am Aufnahmebock (62) bewegbar angebrachten Arretierstück (64) besteht, das durch Federkraft (68) in eine Verriegelungsstellung vorgespannt ist, in der es durch Anlage an den beiden Hebeln (40) ein Verschwenken der Hebel (40) verhindert, und das manuell in eine Freigabestellung bewegbar ist.

11. Zuführvorrichtung nach Anspruch 10, dadurch gekennzeichnet, daß zum Entriegeln der Verriegelung (60) ein mit einer Rampenfläche (78) versehenes Hilfswerkzeug (74) vorgesehen ist, das mit einer Ausnehmung (76) entlang der Zuführleitung (26) so verschiebbar ist, daß seine Rampenfläche (78) zum Verschieben des Arretierstückes (64) mit einer entsprechenden Rampenfläche (72) des Arretierstückes (64) zusammenwirkt.

12. Zuführvorrichtung nach Anspruch 11, dadurch gekennzeichnet, daß das Hilfswerkzeug (74) zwei weitere Rampenflächen (80) aufweist, die bei einer Verschiebung des Hilfswerkzeuges (74) zum Entriegeln der Verriegelung (60) die beiden Hebel (40) in ihre Öffnungsstellung schwenken.

## Claims

1. Feed device for the feeding of assembly parts, in particular nuts or other elements, to a feed channel of a processing device for the pressing in or attachment of assembly parts to components, comprising a nozzle (20) which has a nozzle channel (22) through it for the elements (M), and which can be connected to a guide piece (6) of the processing device (2) so that the nozzle channel (20) communicates at one end with the feed channel (8) provided in the guide piece (6), while the other end of the nozzle channel (22) is connected to a feed line (26), characterised in that two levers (40) are pivotally connected to opposing sides of the nozzle (20), are biased by springs (46) into a closed position for the coupling of the nozzle (20) to the guide piece (6) and can be pivoted manually into an open position to release the nozzle (20) from the guide piece (6), and in that the levers (40) engage in lateral grooves (54) of the guide piece (6) in the coupled state and their hook-like ends (50) embrace the guide piece (6).

2. Feed device according to claim 1, characterised in that the nozzle (20) has a protrusion (34) that can run into a correspondingly shaped receiving opening (36) of the guide piece (6) for the coupling of the feed device, so that the nozzle channel (22) extending through the protrusion (34) opens into the feed channel (8) at the side and the front surface (38) of the nozzle (20) adjoining the protrusion (34) contacts the guide piece (6).

3. Feed device according to claim 1, characterised in that the hook-shaped ends (50) of the levers (40) are provided with inclined surfaces (52) at their confronting sides, these inclined surfaces making it easier to push the levers (40) onto the guide piece (6).

4. Feed device in accordance with one of the preceding claims, characterised in that each of the levers (40) has two arms (40a, b), one of which serves as a retaining arm (40a) acting on the guide piece, and the other of which serves as actuator arm (40b).

5. Feed device in accordance with claim 4, characterised in that the springs (46) act between the actuator arms (40b) and the nozzle (20) and, in the disconnected state, press the retaining arms (40a) with their associated projections (48) against contact surfaces on the nozzle (20).

6. Feed device in accordance with one of the preceding claims, characterised in that the feed line (26) is located in a region (24) of expanded cross section of the nozzle channel (22) and is fixed therein.

7. Feed device in accordance with claim 6, characterised in that the top side of the plate-like nozzle (20) is formed by a clamp plate (28) in the section (24) of the nozzle channel (22) of expanded cross section and the clamp plate (28) together with pins (32), fixes the feed line (26) in the nozzle (20).

8. Feed device in accordance with claims 2 to 7, characterised in that a catch (56) under spring tension is provided in the protrusion (34) of the nozzle (20) and is pressed in the disconnected state by the spring bias into a position blocking the nozzle channel (22), and is pressed automatically into a release position in the coupled state.

9. Feed device in accordance with one of the preceding claims, characterised by a locking mechanism (60) provided at the nozzle (20); said locking mechanism locking the levers (40) in their closed position when in their coupled state.

10. Feed device in accordance with claim 9, characterised in that the locking mechanism (60) consists of a support (62) mounted to the nozzle (20) and a locking element (64) movably attached to the support (62), the locking element being held by spring force (68) in a locked position, which prevents pivoting of the levers (40) due to its contact with the two levers (40), and said locking element being manually movable into a release position.

11. Feed device in accordance with claim 10, characterised in that an auxiliary tool (74) equipped with a ramp surface (78) is provided to unlock the locking mechanism (60) and has a recess (76) that can slide along the feed line (26) so that its ramp surface (78) co-operates with a corresponding ramp surface (72) of the locking element (64) to push the locking element (64) away.

12. Feed device in accordance with claim 11, characterised in that the auxiliary tool (74) features two additional ramp surfaces (80) that pivot the two levers (40) into their open position when the auxiliary tool (74) is pushed along to unlock the locking mechanism (60).

## Revendications

1. Dispositif d'amenée pour des pièces d'assemblage, en particulier des écrous ou autres éléments, vers un canal d'amenée d'une machine de traitement pour la mise en place par pressage ou fixation des pièces d'assemblage sur des composants, comprenant une pièce d'embouchure (20), qui présente un canal continu (22) pour les éléments (M), et est susceptible d'être accouplée à une pièce de guidage (6) de la machine de traitement (2) de telle manière que le canal (20) de la pièce d'embouchure se trouve en liaison à une extrémité avec le canal d'amenée (8) prévu dans la pièce de guidage (6), tandis que l'autre extrémité du canal (22) de la pièce d'embouchure est raccordée à une conduite d'amenée (26), caractérisé en ce que deux leviers (40) sont articulés sur les côtés opposés de la pièce d'embouchure (20), lesquels sont précontraints par des ressorts (46) dans une position de fermeture pour l'accouplement de la pièce d'embouchure (20) sur la pièce de guidage (6), et sont susceptibles d'être basculés manuellement dans une position d'ouverture pour libérer la pièce d'embouchure (20) par rapport à la pièce de guidage (6), et en ce que les leviers (4) s'engagent à l'état accouplé dans des gorges latérales (54) de la pièce de guidage (6), et entourent la pièce de guidage (6) par des extrémités (50) en forme de crochets.

2. Dispositif d'amenée selon la revendication 1, caractérisé en ce que la pièce d'embouchure (20) comporte un talon (34), lequel est susceptible d'être mis en place dans une ouverture de réception de forme correspondante (36) de la pièce de guidage (6) pour l'accouplement des dispositifs d'amenée, de telle sorte que le canal (22) de la pièce d'embouchure qui s'étend à travers le talon (34) débouche latéralement dans le canal d'amenée (8), et en ce que la pièce d'embouchure (24) est appliquée contre la pièce de guidage (6) par sa surface frontale (38) adjacente au talon (34).

3. Dispositif d'amenée selon la revendication 1, caractérisé en ce que les extrémités en forme de crochets (50) des leviers (40) sont pourvues de biseaux (52) sur leurs côtés tournés l'un vers l'autre, lesquels facilitent l'enfilement des leviers (40) sur la pièce de guidage (6).

4. Dispositif d'amenée selon l'une quelconque des revendications précédentes, caractérisé en ce que chacun des leviers (40) comporte deux bras (40a, b), parmi lesquels l'un des bras est réalisé sous forme d'un bras de maintien (40a) qui attaque la pièce de guidage, et l'autre bras sert de bras d'actionnement (40b).

5. Dispositif d'amenée selon la revendication 4, caractérisé en ce que les ressorts (46) agissent entre les bras d'actionnement et (40b) et la pièce d'embouchure (20), et dans la situation désaccouplée, ils repoussent les bras de maintien (40a) contre des surfaces d'appui de la pièce d'embouchure (20), au moyen de saillies (48) prévues sur lesdits bras.

6. Dispositif d'amenée selon l'une quelconque des revendications précédentes, caractérisé en ce que la conduite d'amenée (26) est agencée dans un tronçon (24) de section élargie du canal (22) de la pièce d'embouchure, et en ce qu'elle est fixée dans celui-ci.

7. Dispositif d'amenée selon la revendication 6, caractérisé en ce que la face supérieure de la pièce d'embouchure (20), réalisée sous forme de plaque, est formée dans la région du tronçon (24) de section élargie du canal (22) par une plaque de serrage (28) qui fixe la conduite d'amenée (26) dans la pièce d'embouchure (20), conjointement avec des tiges (32).

8. Dispositif d'amenée selon l'une quelconque des revendications 2 à 7, caractérisé en ce que dans le talon (34) de la pièce d'embouchure (20) est agencé un cliquet (56) sollicité par un ressort, lequel est repoussé a l'état désaccouplé par la sollicitation du ressort jusque dans une position qui bloque le canal (22) de la pièce d'embouchure, et est repoussé lors de l'accouplement automatiquement dans une position de libération.

9. Dispositif d'amenée selon l'une quelconque des revendications précédentes, caractérisé par un verrouillage (60) prévu sur la pièce d'embouchure (20), qui verrouille les leviers (40) dans leur position de fermeture dans la situation accouplée.

10. Dispositif d'amenée selon la revendication 9, caractérisé en ce que le verrouillage (60) est constitué par un bloc de réception (62) fixé sur la pièce d'embouchure (20), et par une pièce d'arrêt (64) montée de façon mobile sur le bloc de réception (62), ladite pièce d'arrêt étant précontrainte par la force d'un ressort (68) dans une position de verrouillage dans laquelle elle empêche un basculement des leviers (40) par contact contre les deux leviers (40), et étant susceptible d'être déplacée manuellement jusque dans une position de libération.

11. Dispositif d'année selon la revendication 10, caractérisé en ce que, pour le déverrouillage du verrouillage (60) il est prévu un outil accessoire (74) pourvu d'une surface de rampe (78), ledit outil pouvant être déplacé avec un évidement (76) le long de la conduite d'amenée (26) de telle sorte que sa surface de rampe (78) coopère avec une surface de rampe correspondante (72) de la pièce d'arrêt (64), pour le déplacement de cette dernière.

12. Dispositif d'amenée selon la revendication 11, caractérisé en ce que l'outil accessoire (74) comporte deux autres surfaces de rampe (80) qui font basculer les deux leviers (40) jusque dans leur position d'ouverture, lors d'un déplacement de l'outil accessoire (74) pour déverrouiller le verrouillage (60).
